(19) **Europäisches Patentamt / European Patent Office / Office européen des brevets**

(11) **EP 4 554 112 A1**

(12) **EUROPEAN PATENT APPLICATION**
published in accordance with Art. 153(4) EPC

(43) Date of publication:
14.05.2025 Bulletin 2025/20

(21) Application number: 23842008.7

(22) Date of filing: 25.06.2023

(51) International Patent Classification (IPC):
*H04B 7/185* (2006.01)

(52) Cooperative Patent Classification (CPC):
H04B 7/185; H04L 5/14; H04W 72/044;
H04W 72/0446

(86) International application number:
PCT/CN2023/102230

(87) International publication number:
WO 2024/016942 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.07.2022 CN 202210857620

(71) Applicant: Huawei Technologies Co., Ltd.
Shenzhen, Guangdong 518129 (CN)

(72) Inventors:
• KONG, Chuili
  Shenzhen, Guangdong 518129 (CN)
• QIN, Dali
  Shenzhen, Guangdong 518129 (CN)
• CHEN, Ying
  Shenzhen, Guangdong 518129 (CN)
• WANG, Jun
  Shenzhen, Guangdong 518129 (CN)

(74) Representative: Gill Jennings & Every LLP
The Broadgate Tower
20 Primrose Street
London EC2A 2ES (GB)

(54) **COMMUNICATION METHOD AND APPARATUS, DEVICE, AND STORAGE MEDIUM**

(57)    This application provides a communication method and apparatus, a device, and a storage medium. The method includes: A terminal device determines a first frame structure, where the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between a network device and the terminal device; and the terminal device communicates with the network device by using the first frame structure. In this way, an uplink/downlink collision is avoided when the network device communicates with the terminal device by using the first frame structure.

100

Terminal device — Network device

S110. Determine a first frame structure, where the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between the network device and the terminal device

S120-1. Send downlink information by using the first frame structure

S120-2. Send uplink information by using the first frame structure

FIG. 3

**Description**

This application claims priority to Chinese Patent Application No. 202210857620.1, filed with the China National Intellectual Property Administration on July 20, 2022 and entitled "COMMUNICATION METHOD AND APPARATUS, DEVICE, AND STORAGE MEDIUM", which is incorporated herein by reference in its entirety.

**TECHNICAL FIELD**

This application relates to the field of communication technologies, and in particular, to a communication method and apparatus, a device, and a storage medium.

**BACKGROUND**

At present, in some communication systems with a large round trip delay (round trip delay, RTD), for example, a satellite communication system, to avoid a problem of uplink and downlink interference caused by the large RTD, a terminal and a satellite usually communicate with each other through frequency division duplex (frequency division duplex, FDD). However, how to implement TDD-based communication in the communication system with the large RTD, for example, the satellite communication system, so as to utilize high spectrum utilization, simple receiving and sending processing, flexible scheduling of time division duplex (time division duplex, TDD), and other advantages is an urgent problem to be resolved currently.

**SUMMARY**

Embodiments of this application provide a communication method and apparatus, a device, a storage medium, to implement TDD-based communication in a communication system with a large RTD.

According to a first aspect, an embodiment of this application provides a communication method, including: A terminal device determines a first frame structure, where the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and a round trip delay RTD of a first beam is less than one time unit, and the first beam is a beam used for communication between a network device and the terminal device; and the terminal device communicates with the network device by using the first frame structure.

According to the communication method provided in the first aspect, based on the RTD of the first beam used for communication between the network device and the terminal device, the periodicity of the first frame structure used for communication between the network device and the terminal device is restricted, so that the time difference between the periodicity of the first frame structure and the RTD of the first beam is less than one time unit, and an uplink/downlink collision is avoided when the network device communicates with the terminal device by using the first frame structure.

In a possible implementation, the method further includes: The terminal device receives first configuration information sent by the network device, where the first configuration information includes the periodicity of the first frame structure.

According to the communication method provided in this implementation, the periodicity of the first frame structure is directly indicated, so that the terminal device obtains the periodicity of the first frame structure.

In a possible implementation, the method further includes: The terminal device determines an identifier of the first beam; and the terminal device determines the periodicity of the first frame structure in a first correspondence based on the identifier of the first beam, where the first correspondence includes at least one beam identifier and a periodicity of at least one frame structure, and the at least one beam identifier is in one-to-one correspondence with the periodicity of the at least one frame structure.

According to the communication method provided in this implementation, the network device does not need to configure the periodicity of the first frame structure, to reduce signaling overheads.

In a possible implementation, the method further includes: The terminal device determines the periodicity of the first frame structure based on an ephemeris and/or a global navigation satellite system GNSS.

According to the communication method provided in this implementation, the network device does not need to configure the periodicity of the first frame structure, to reduce signaling overheads.

In a possible implementation, the method further includes: The terminal device receives second configuration information sent by the network device, where the second configuration information includes a frame structure identifier; and the terminal device determines the first frame structure in a second correspondence based on the frame structure identifier, where the second correspondence includes at least one frame structure identifier and at least one frame structure, and the at least one frame structure identifier is in one-to-one correspondence with the at least one frame structure.

According to the communication method provided in this implementation, compared with a manner in which information such as the periodicity of the first frame structure, a quantity of uplink time units, and a quantity of downlink time units is indicated by using system information block (system information block, SIB) signaling, a manner in which the identifier of the frame structure is indicated reduces signaling overheads.

In a possible implementation, the method further includes: The terminal device determines an identifier of the first beam; the terminal device determines a third correspondence based on the identifier of the first beam, where the third correspondence includes at least one frame structure identifier and at least one frame structure, and the at least one frame structure identifier is in one-to-one correspondence with the at least one frame structure; the terminal device receives third configuration information sent by the network device, where the third configuration information includes a frame structure identifier; and the terminal device determines the first frame structure in the third correspondence based on the frame structure identifier.

According to the communication method provided in this implementation, compared with a manner in which information such as the periodicity of the first frame structure, a quantity of uplink time units, and a quantity of downlink time units is indicated by using SIB signaling, a manner in which the identifier of the frame structure is indicated reduces signaling overheads.

In a possible implementation, the RTD is an RTD of a first ground point covered by the first beam, and the first ground point is a ground point that is in ground points covered by the first beam and that is closest to the network device.

According to the communication method provided in this implementation, an uplink/downlink collision is avoided during communication between the network device and the terminal device.

Optionally, the RTD is related to an elevation angle of the first beam, the elevation angle of the first beam is an included angle between a ground plane on which the first ground point covered by the first beam is located and a first connection line, and the first connection line is a virtual connection line between the first ground point and the network device.

In a possible implementation, the periodicity of the first frame structure is determined based on the RTD and a length of a time unit.

According to the communication method provided in this implementation,

in a possible implementation, the periodicity $P$ of the first frame structure satisfies the following formula (1):

$$P=int(RTD/Ls)*L_s \qquad (1),$$

where
$int$ is a rounding function, and $L_s$ is the length of the time unit.

According to the communication method provided in this implementation, when the periodicity of the first frame structure should be an integer multiple of the time unit, the periodicity of the first frame structure should be as close as possible to the RTD of the first beam, to ensure that there is no problem of an uplink/downlink collision in a communication system.

In a possible implementation, a quantity of guard time units is determined based on a differential RTD of the first beam.

According to the communication method provided in this implementation,
in a possible implementation, the quantity of guard time units is a sum of the differential RTD and uplink/downlink switching time.

According to the communication method provided in this implementation, a guard period that meets a time length is obtained, and impact of an excessively long guard period on spectrum efficiency is avoided.

In a possible implementation, that the terminal device determines the first frame structure further includes: The terminal device determines the quantity of uplink time units and the quantity of downlink time units.

According to the communication method provided in this implementation, the first frame structure is further determined.

According to a second aspect, an embodiment of this application provides a communication method, including: A network device sends frame structure configuration information to a terminal device, where the frame structure configuration information is used to configure a first frame structure, the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between the network device and the terminal device; and the network device communicates with the terminal device by using the first frame structure.

In a possible implementation, the frame structure configuration information includes the periodicity of the first frame structure.

In a possible implementation, the method further includes: The network device determines an identifier of the first beam; and the network device determines the periodicity of the first frame structure in a first correspondence based on the identifier of the first beam, where the first correspondence includes at least one beam identifier and a periodicity of at least one frame structure, and the at least one beam identifier is in one-to-one correspondence with the periodicity of the at least one frame structure.

In a possible implementation, the method further includes: The network device determines the periodicity of the first frame structure based on an ephemeris and/or a global navigation satellite system GNSS.

In a possible implementation, the frame structure configuration information includes a frame structure identifier, the frame structure identifier is used to determine the first frame structure in a second correspondence, the second correspondence includes at least one frame structure identifier and at least one frame structure, and the at least one frame structure identifier is in one-to-one correspondence with the at least one frame structure.

In a possible implementation, the frame structure configuration information includes a frame structure identifier, the frame structure identifier is used to determine the first frame structure in a third correspondence corresponding to the first beam, the third correspondence includes at least one frame structure identifier and at least one frame structure of the first beam, and the at least one frame structure identifier is in one-to-one correspondence with the at least one frame structure.

In a possible implementation, the RTD is related to an elevation angle of the first beam, the elevation angle of the first beam is an included angle between a ground plane on which a first ground point covered by the first beam is located and a first connection line, and the first connection line is a virtual connection line between the first ground point and the network device.

In a possible implementation, the periodicity of the first frame structure is determined based on the RTD and a length of a time unit.

In a possible implementation, the periodicity $P$ of the first frame structure satisfies the following formula (1):

$$P=int(RTD/Ls)*L_s \qquad (1),$$

where
$int$ is a rounding function, and $L_s$ is the length of the time unit.

In a possible implementation, a quantity of guard time units is determined based on a differential RTD of the first beam.

In a possible implementation, the quantity of guard time units is a sum of the differential RTD and uplink/downlink switching time.

In a possible implementation, the method further includes: The network device determines a quantity of uplink time units and a quantity of downlink time units.

For beneficial effects of the communication method provided in the second aspect and the possible implementations of the second aspect, refer to the beneficial effects achieved by the first aspect and the possible implementations of the first aspect. Details are not described herein again.

According to a third aspect, an embodiment of this application provides a communication apparatus, including: a processing unit, configured to determine a first frame structure, where the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and a round trip delay RTD of a first beam is less than one time unit, and the first beam is a beam used for communication between a network device and the communication apparatus; and a transceiver unit, configured to communicate with the network device by using the first frame structure.

In a possible implementation, the transceiver apparatus is further configured to receive first configuration information sent by the network device, where the first configuration information includes the periodicity of the first frame structure.

In a possible implementation, the processing unit is further configured to determine an identifier of the first beam; and the processing unit is further configured to determine the periodicity of the first frame structure in a first correspondence based on the identifier of the first beam, where the first correspondence includes at least one beam identifier and a periodicity of at least one frame structure, and the at least one beam identifier is in one-to-one correspondence with the periodicity of the at least one frame structure.

In a possible implementation, the processing unit is further configured to determine the periodicity of the first frame structure based on an ephemeris and/or a global navigation satellite system GNSS.

In a possible implementation, the transceiver unit is further configured to receive second configuration information sent by the network device, where the second configuration information includes a frame structure identifier; and the processing unit is further configured to determine the first frame structure in a second correspondence based on the frame structure identifier, where the second correspondence includes at least one frame structure identifier and at least one frame structure, and the at least one frame structure identifier is in one-to-one correspondence with the at least one frame structure.

In a possible implementation, the processing unit is further configured to determine an identifier of the first beam; the processing unit is further configured to determine a third correspondence based on the identifier of the first beam, where the third correspondence includes at least one frame structure identifier and at least one frame structure, and the at least one frame structure identifier is in one-to-one correspondence with the at least one frame structure; the transceiver unit is further configured to receive third configuration information sent by the network device, where the third configuration information includes a frame structure identifier; and the processing unit is further configured to determine the first frame structure in the third correspondence based on the frame structure identifier.

In a possible implementation, the RTD is an RTD of a first ground point covered by the first beam, and the first ground point is a ground point that is in ground points covered by the first beam and that is closest to the network device.

In a possible implementation, the RTD is related to an elevation angle of the first beam, the elevation angle of the first beam is an included angle between a ground plane on which the first ground point covered by the first beam is located and a first connection line, and the first connection line is a virtual connection line between the first ground point and the network device.

In a possible implementation, the periodicity of the first frame structure is determined based on the RTD and a length of a time unit.

In a possible implementation, the periodicity P of the first frame structure satisfies the following formula (1):

$$P=int(RTD/Ls)*L_s \qquad (1),$$

where
$int$ is a rounding function, and $L_s$ is the length of the time unit.

In a possible implementation, a quantity of guard time units is determined based on a differential RTD of the first beam.

In a possible implementation, the quantity of guard time units is a sum of the differential RTD and uplink/downlink switching time.

In a possible implementation, the processing unit is specifically configured to determine a quantity of uplink time units and a quantity of downlink time units.

For beneficial effects of the communication apparatus provided in the third aspect and the possible implementations of the third aspect, refer to the beneficial effects achieved by the first aspect and the possible implementations of the first aspect. Details are not described herein again.

According to a fourth aspect, an embodiment of this application provides a communication apparatus, including: a processing unit, configured to determine a first frame structure, where the frame structure configuration information is used to configure the first frame structure, the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between the communication apparatus and a terminal device; and a transceiver unit, configured to send frame structure configuration information to the terminal device, where the transceiver unit is further configured to communicate with the terminal device by using the first frame structure.

In a possible implementation, the frame structure configuration information includes the periodicity of the first frame structure.

In a possible implementation, the processing unit is further configured to determine an identifier of the first beam; and the processing unit is further configured to determine the periodicity of the first frame structure in a first correspondence based on the identifier of the first beam, where the first correspondence includes at least one beam identifier and a periodicity of at least one frame structure, and the at least one beam identifier is in one-to-one correspondence with the periodicity of the at least one frame structure.

In a possible implementation, the processing unit is further configured to determine the periodicity of the first frame structure based on an ephemeris and/or a global navigation satellite system GNSS.

In a possible implementation, the frame structure configuration information includes a frame structure identifier, the frame structure identifier is used to determine the first frame structure in a second correspondence, the second correspondence includes at least one frame structure identifier and at least one frame structure, and the at least one frame structure identifier is in one-to-one correspondence with the at least one frame structure.

In a possible implementation, the frame structure configuration information includes a frame structure identifier, the frame structure identifier is used to determine the first frame structure in a third correspondence corresponding to the first beam, the third correspondence includes at least one frame structure identifier and at least one frame structure of the first beam, and the at least one frame structure identifier is in one-to-one correspondence with the at least one frame structure.

In a possible implementation, the RTD is related to an elevation angle of the first beam, the elevation angle of the first beam is an included angle between a ground plane on which a first ground point covered by the first beam is located and a first connection line, and the first connection line is a virtual connection line between the first ground point and the network device.

In a possible implementation, the periodicity of the first frame structure is determined based on the RTD and a length of a time unit.

In a possible implementation, the periodicity *P* of the first frame structure satisfies the following formula (1):

$$P = int(RTD/Ls)*L_s \qquad (1),$$

where

*int* is a rounding function, and $L_s$ is the length of the time unit.

In a possible implementation, a quantity of guard time units is determined based on a differential RTD of the first beam.

In a possible implementation, the quantity of guard time units is a sum of the differential RTD and uplink/downlink switching time.

In a possible implementation, the processing unit is further configured to determine a quantity of uplink time units and a quantity of downlink time units.

For beneficial effects of the communication apparatus provided in the fourth aspect and the possible implementations of the fourth aspect, refer to the beneficial effects achieved by the first aspect and the possible implementations of the first aspect. Details are not described herein again.

According to a fifth aspect, an embodiment of this application provides a communication apparatus, including a processor and a memory. The memory is configured to store a computer program, and the processor is configured to invoke the computer program stored in the memory and run the computer program, to perform the method according to any one of the first aspect, the second aspect, or the possible implementations.

According to a sixth aspect, an embodiment of this application provides a communication system, including a terminal device and a network device. The terminal device is configured to perform the method according to the first aspect or the possible implementations, and the network device is configured to perform the method according to the second aspect or the possible implementations.

According to a seventh aspect, an embodiment of this application provides a chip, including a processor, configured to invoke computer instructions from a memory and run the computer instructions, to enable a device in which the chip is installed to perform the method according to the first aspect, the second aspect, or the possible implementations.

According to an eighth aspect, an embodiment of this application provides a computer-readable storage medium, configured to store computer program instructions, and the computer program enables a computer to perform the method according to the first aspect, the second aspect, or the possible implementations.

According to a ninth aspect, an embodiment of this application provides a computer program product, including computer program instructions. The computer program instructions enable a computer to perform the method according to the first aspect, the second aspect, or the possible implementations.

According to a tenth aspect, an embodiment of this application provides an apparatus, including a logic circuit and an input/output interface. The input/output interface is configured to receive a signal from a communication apparatus other than the apparatus and transmit the signal to the logic circuit, or send a signal from the logic circuit to a communication apparatus other than the apparatus. The logic circuit is configured to execute code instructions to implement the method according to the first aspect, the second aspect, or the possible implementations.

According to an eleventh aspect, an embodiment of this application provides a terminal, including the apparatus according to the third aspect, the fourth aspect, or the possible implementations.

## BRIEF DESCRIPTION OF DRAWINGS

FIG. 1 is a diagram of a satellite communication system according to an embodiment of this application;

FIG. 2a is a diagram of a frame structure according to an embodiment of this application;

FIG. 2b is a diagram of slot occupation in uplink communication and downlink communication according to an embodiment of this application;

FIG. 3 is an interaction flowchart of a communication method according to an embodiment of this application;

FIG. 4 is a diagram of a satellite beam according to an embodiment of this application;

FIG. 5 is a diagram of a satellite beam according to an embodiment of this application;

FIG. 6 is a diagram of a frame structure according to an embodiment of this application;

FIG. 7 is a diagram of slot occupation in uplink communication and downlink communication according to an embodiment of this application;

FIG. 8 is an interaction flowchart of a communication method according to an embodiment of this application;

FIG. 9 is a block diagram of a communication apparatus according to an embodiment of this application; and

FIG. 10 is another block diagram of a communication apparatus according to an embodiment of this application.

## DESCRIPTION OF EMBODIMENTS

The following describes technical solutions of this application with reference to the accompanying drawings.

A communication method provided in this application may be applied to various communication systems, for example, a global system for mobile communication (Global System for Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, a long term evolution advanced (long term evolution advanced, LTE-A) system, a new radio (New Radio, NR) system, an evolved system of an NR system, an LTE in unlicensed spectrum (LTE-based access to unlicensed spectrum, LTE-U) system, an NR in unlicensed spectrum (NR-based access to unlicensed spectrum, NR-U) system, a non-terrestrial network (Non-Terrestrial Network, NTN) system, a universal mobile telecommunications system (Universal Mobile Telecommunications System, UMTS), a wireless local area network (Wireless Local Area Network, WLAN) system, a wireless fidelity (Wireless Fidelity, Wi-Fi) system, a 5th-generation (5th-Generation, 5G) communication system, another communication system, or a future communication system (for example, a 6th-generation communication system).

A terminal device in embodiments of this application may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a station (STATION, ST) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, a vehicle-mounted device, a wearable device, a terminal device in a next-generation communication system, for example, an NR network, or a terminal device in a future evolved public land mobile network (Public Land Mobile Network, PLMN).

In embodiments of this application, the terminal device may be deployed on land, including an indoor device, an outdoor device, a handheld device, or a vehicle-mounted device, or may be deployed on a water surface (for example, a ship), or may be deployed in the air (for example, on an uncrewed aerial vehicle, an airplane, a balloon, or a satellite).

In embodiments of this application, the terminal device may be a mobile phone (Mobile Phone), a tablet computer (Pad), a computer having a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self-driving), a wireless terminal device in telemedicine (remote medical), a wireless terminal device in a smart grid (smart grid), an uncrewed aerial vehicle, a wireless terminal device in transportation safety (transportation safety), a wireless terminal device in a smart city (smart city), a wireless terminal device in a smart home (smart home), or the like.

By way of example but not limitation, in embodiments of this application, the terminal device may alternatively be a wearable device. The wearable device may also be referred to as a wearable smart device, and is a collective term of wearable devices that are intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. Generalized wearable smart devices include full-featured and large-size devices that can implement complete or partial functions without depending on smartphones, for example, smart watches or smart glasses, and devices that are dedicated to only one type of application and need to be used together with other devices such as smartphones, for example, various smart bands or smart jewelry for monitoring physical signs.

Satellites play an irreplaceable role in some important fields such as space communication, aeronautical communication, and maritime communication. Satellite communication has characteristics of a long communication distance, a large coverage area, and flexible networking. The satellite communication can provide services for both fixed terminals and mobile terminals. The 3rd Generation Partnership Project (3rd Generation Partnership Project, 3GPP) standard organization has released 5G technical standards to study on space-ground integrated communication technologies. A main purpose is to integrate existing 5G standards and satellite communication technologies to achieve full coverage around the world. At present, the study is initiated, and study on an integrated 5G-satellite architecture is carried out.

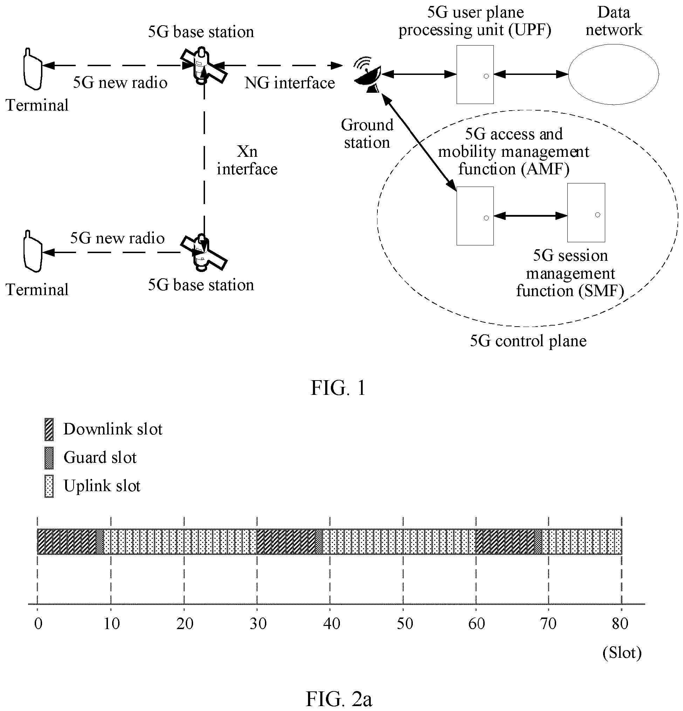

FIG. 1 is a diagram of a satellite communication system according to an embodiment of this application. As shown in FIG. 1, a terrestrial mobile terminal communicates with a satellite by using a 5G new radio access network, and a 5G base station is deployed on the satellite and is connected to a terrestrial core network through a radio link. In addition, a radio link exists between satellites, to perform signaling exchange and user data transmission between base stations. In this scenario, a network device in the technical solutions of this application is a base station, and a terminal device is a terminal in the figure. Network elements in FIG. 1 and interfaces of the network elements are described as follows:

The terminal is a mobile device supporting 5G new radio, and is typically a mobile device such as a mobile phone or a tablet computer (pad). The terminal may access a satellite network through an air interface and initiate services such as call and internet access.

The base station mainly provides a radio access service, schedules a radio resource for an access terminal, provides a reliable radio transmission protocol and data encryption protocol, and so on.

A core network includes services such as user access control, mobility management, session management, user security authentication, and charging. The core network includes a plurality of function units, which can be classified into control-plane function entities and data-plane function entities. An access and mobility management unit (Authentication Management Function, AMF) is responsible for user access management, security authentication, and mobility management. A user plane function (user plane function, UPF) is responsible for managing user plane data transmission, traffic statistics, and other functions.

A ground station is responsible for forwarding signaling and service data between a satellite base station and the core network.

New radio is a radio link between the terminal and the base station.

An Xn interface is an interface between 5G base stations and is mainly for signaling exchange such as switching.

An NG interface is an interface between a 5G base station and a 5G core network, and mainly exchanges signaling such as NAS signaling of the core network and user service data.

The terminal device and the network device perform bidirectional information transmission typically through frequency division duplex (frequency division duplex, FDD) or time division duplex (time division duplex, TDD). For example, in an FDD transmission mode, the terminal device may perform uplink transmission and downlink transmission simultaneously in a same time domain unit based on a downlink (downlink, DL) bandwidth part (bandwidth part, BWP) and an uplink (uplink, UL) BWP that are configured by the network device. In a TDD transmission mode, the terminal device and the network device multiplex a same BWP. Therefore, both uplink transmission and downlink transmission cannot be performed on a same time domain resource. Generally, TDD-based communication tends to be performed in a terrestrial cellular system. Reasons include the following: 1. The use of same frequency bands for uplink information and downlink information can save a half of frequency bands compared with the use of FDD. 2. A flexible frame structure configuration is implemented to adapt to different communication service scenarios. For example, in a scenario with heavy downlink load, a configuration of increasing a quantity of downlink slots is implemented, and in a scenario with uplink load, a configuration of increasing a quantity of uplink slots is implemented. 3. The way of bypassing the use of a transmit/receive isolator to receive uplink information and downlink information for the network device reduces device complexity, and the way of sharing an intermediate/radio frequency module by a receiving link and a sending link reduces device costs.

However, because a round trip delay (round trip delay, RTD) in the satellite communication system is usually large, to avoid a problem of uplink/downlink interference caused by the large RTD, the terminal usually communicates with the satellite through FDD. Therefore, how to implement TDD-based communication in the satellite communication system is a problem to be resolved in this application.

At present, a periodicity of a frame structure used in an NR system is 10 ms, and a quantity of slots in the frame structure is determined by a subcarrier spacing (subcarrier spacing, SCS). For example, when the SCS is 120 kHz, the quantity of slots is 80. Refer to a pattern (pattern) of a TDD-based frame structure shown in FIG. 2a. The frame structure in the NR system includes 80 slots shown in FIG. 2a in one periodicity, and the 80 slots include a plurality of uplink slots, a plurality of downlink slots, and a plurality of guard slots.

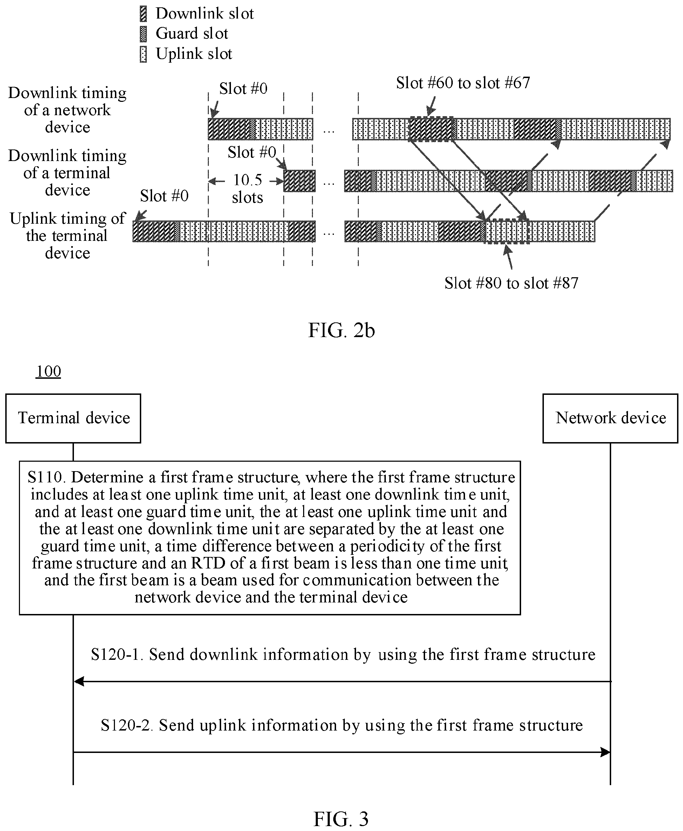

When the frame structure used in the NR system is applied to the satellite communication system, for example, an RTD between the terminal device and the network device in the satellite communication system is 29 slots, as shown in FIG. 2b, the network device sends downlink information based on downlink timing of the network device. Time at which the terminal device receives the downlink information sent by the network device is later than downlink information sending time by 14.5 slots. In other words, downlink timing of the terminal device is later than the downlink timing of the network device by 14.5 slots. The terminal device sends uplink information 21 slots earlier, so that the network device receives, in a corresponding uplink slot, the uplink information sent by the terminal device. Refer to FIG. 2b. Downlink information sent by the network device in a slot #60 to a slot #67 falls into an uplink slot (for example, a slot #80 to a slot #87) of uplink timing of the terminal device, and the slot #80 to the slot #87 of the uplink timing of the terminal device are used to transmit the uplink information. Therefore, an uplink/downlink collision exists in the slot #60 to the slot #67. It can be learned that an existing frame structure in the NR system cannot be applied to the satellite communication system.

For a communication scenario with a large RTD, for example, the foregoing communication scenario of the satellite communication system, to avoid a problem of an uplink/downlink collision during communication between the network device (for example, the satellite) and the terminal device, a frame structure (the same as a first frame structure in the following) applicable to the communication scenario in which the large RTD is introduced into embodiments of this application. A periodicity of the frame structure is close to the RTD. For example, a time difference between the periodicity of the frame structure and the RTD is less than one time unit. In this way, the problem of the uplink/downlink collision is avoided and reliability of the communication system is improved.

For ease of understanding of embodiments of this application, terms in this application are first briefly described.

1. A time unit may be, for example, a slot (slot), a subframe (subframe), a symbol (symbol), or another time unit defined in the future. It should be noted that the time unit is a measurement unit in time domain, and is not necessarily a minimum time unit.

In NR, a slot is a scheduling unit. The following describes the method provided in embodiments of this application by using an example in which the slot is used as the time unit. It may be understood that descriptions of the slot in the following embodiments may be replaced with those of another time unit, for example, a subframe or a symbol. This is not limited in embodiments of this application.

2. A frame or a radio frame (frame) is a transmission unit for wireless communication.

3. A frame structure is also referred to as a radio frame structure, and is a characteristic of a wireless communication physical layer that defines a time domain signal transmission structure. The network device and the terminal device may perform wireless communication by using a time domain resource constrained by the frame structure.

The time domain resource constrained by the frame structure may include an uplink time unit, a downlink time unit, a guard time unit, or the like.

It may be understood that the network device may send the downlink information to the terminal device in the downlink time unit, and the terminal device may send the uplink information to the network device in the uplink time unit. When downlink transmission is switched to uplink transmission, the downlink information sent by the network device arrives at each terminal device at different time. The guard time unit needs to be set to ensure that all terminal devices receive the downlink information sent by the network device, so that the terminal devices can simultaneously send uplink information in an upcoming uplink time unit, in other words, uplink synchronization is implemented.

One or more guard time units may be referred to as a guard period (guard period, GP), guard time (guard period, GT), or the like. This is not limited in this application. When the method provided in embodiments of this application is described below by using a slot as an example of a time unit, the uplink time unit may be an uplink slot U, the downlink time unit may be a downlink slot D, and the guard time unit may be a guard slot S.

4. Uplink/downlink switching time is time required for switching the terminal device from a receiving state to a sending state, or time required for switching the terminal device from a sending state to a receiving state. Table 1 below is used as an example to separately show minimum time $N_{Rx\text{-}Tx}$ required for switching the terminal device from the receiving state to the sending state and minimum time $N_{Tx\text{-}Rx}$ required for switching the terminal device from the sending state to the receiving state in a frequency range (frequency range, FR) 1 and an FR 2. For example, in the frequency range (frequency range, FR) 1, time for switching the terminal device from the receiving state to the sending state or from the sending state to the receiving state is not shorter than 25600 Tc.

Table 1

| Uplink/downlink switching time | FR1 | FR2 |
|---|---|---|
| $N_{Tx\text{-}Rx}$ | 25600 | 13792 |
| $N_{Rx\text{-}Tx}$ | 25600 | 13792 |

For ease of understanding of embodiments of this application, the following descriptions are provided.

First, in the following embodiments, "first", "second", "third", and various numerical symbols are merely distinguished for ease of description, and are not intended to limit the scope of embodiments of this application. For example, different frame structures, beams, configuration information, correspondences, or ground points are distinguished.

Second, "predefinition" may be implemented by prestoring corresponding code or a table in a device (for example, including a terminal device and a network device), or may be implemented in another manner that may indicate related information. A specific implementation thereof is not limited in this application.

"Preconfiguration" may be implemented by prestoring corresponding code or a table in a device (for example, including a terminal device and a network device), or may be implemented in another manner that may indicate related information, or may be implemented through signaling preconfiguration, for example, implemented by the network device through signaling preconfiguration or in another manner. A specific implementation thereof is not limited in this application.

In embodiments of this application, a preset resource may be a predefined resource, or may be a preconfigured resource, or a resource indicated by a base station by using radio resource control (radio resource control, RRC) and/or downlink control information (downlink control information, DCI).

Fourth, a "protocol" in embodiments of this application may be a standard protocol in the communication field, for example, including an LTE protocol, an NR protocol, and a related protocol applied to a future communication system. This is not limited in this application.

Fifth, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

The following describes the communication method provided in embodiments of this application with reference to the accompanying drawings.

It should be understood that, for ease of understanding and description, the following mainly describes the method provided in embodiments of this application by using interaction between the terminal device and the network device as an example. For example, the terminal device may be the terminal in the satellite communication system shown in FIG. 1, and the network device may be the satellite in the communication system shown in FIG. 1.

However, it should be understood that this should not constitute any limitation on an execution body of the method provided in this application. Any device that can perform, through a program that can run code of the method provided in embodiments of this application, the method provided in embodiments of this application may be used as the execution body of the method provided in embodiments of this application. For example, the terminal device shown in the following embodiments may be replaced with a component in the terminal device, for example, a chip, a chip system, or another functional module that can invoke a program and execute the program. The network device shown in the following embodiments may be replaced with a component in the network device, for example, a chip, a chip system, or another functional module that can invoke a program and execute the program.

FIG. 3 is an interaction flowchart of a communication method 100 according to an embodiment of this application. As shown in FIG. 3, the method 100 may include S110 and S120. The following describes the steps in the method 100.

S110. A terminal device determines a first frame structure, where the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between a network device and the terminal device.

S120-1. The network device sends downlink information to the terminal device by using the first frame structure. Correspondingly, the terminal device receives, by using the first frame structure, the downlink information sent by the network device.

S120-2. The terminal device sends uplink information to the network device by using the first frame structure. Correspondingly, the network device receives, by using the first frame structure, the uplink information sent by the terminal device.

Optionally, either S120-1 or S120-2 may be performed. Alternatively, S120-1 and S120-2 may be separately performed. For example, the network device sends the downlink information to the terminal device by using the first frame structure, and the terminal device sends the uplink information to the network device by using the first frame structure. For another example, the terminal device receives, by using the first frame structure, the downlink information sent by the network device, and sends, by using the first frame structure, the uplink information to the network device in response to the received downlink information. This is not limited in this application.

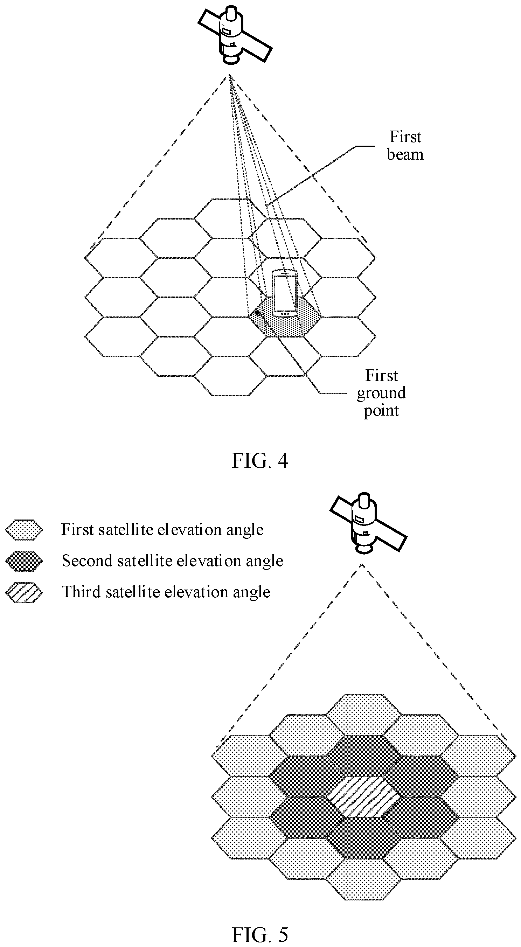

The network device usually implements communication coverage based on a plurality of beams, and each beam may cover one or more terminal devices. With reference to FIG. 4, the terminal device in this embodiment of this application may be one of a plurality of terminal devices covered by a satellite beam.

A first beam may be a beam used for downlink communication. As shown in FIG. 4, a satellite sends downlink information to the terminal device by using the first beam. However, this is not limited in this application. For example, the first beam may be a beam for uplink communication. In this case, a plurality of antennas/antenna arrays are generally deployed on the terminal device, to form the first beam to communicate with the network device.

The RTD of the first beam may be an RTD of a first ground point covered by the first beam. Refer to FIG. 4. The first ground point may be any ground point covered by the first beam. For example, the first ground point may be a ground point closest to the network device in a ground coverage area of the first beam. Correspondingly, the RTD of the first beam is a minimum RTD ($RTD_{min}$) in RTDs of all ground points in the first beam. Certainly, this is not limited in this application. For example, the first ground point may alternatively be a ground point farthest from the network device in a ground coverage area of the first beam. Correspondingly, the RTD of the first beam is a maximum RTD ($RTD_{max}$) in RTDs of all ground points in the first beam, or the first ground point may be a ground point whose distance from the network device is a median value in all ground points in a ground coverage area of the first beam. Correspondingly, the RTD of the first beam is ($RTD_{max}$ +$RTD_{min}$)/2.

It should be understood that the RTD of the first ground point is related to a satellite elevation angle of the first ground point, the satellite elevation angle of the first ground point (also referred to as an elevation angle of the first beam) is an included angle between a ground plane on which the first ground point is located and a first connection line, and the first connection line is a virtual connection line between the first ground point and the network device.

To ensure that there is no problem of an uplink/downlink collision in a communication system, the periodicity of the first frame structure in this embodiment of this application should be as close as possible to the RTD of the first beam. Generally, the periodicity of the first frame structure should be an integer multiple of the time unit. Based on this, that the periodicity of the first frame structure is as close as possible to the RTD of the first beam means that the time difference between the periodicity of the first frame structure and the RTD of the first beam is less than one time unit.

For example, the periodicity P of the first frame structure satisfies the following formula (1):

$$P=int(RTD/Ls)*L_s \qquad (1)$$

$int$ is a rounding function, and $L_s$ is a length of the time unit. The rounding function $int$ may be used to implement one of rounding up, rounding down, or rounding off. For example, when the $int$ function is implemented as a round-up function $ceil,$ assuming that the $RTD=5.2\ ms$ and $L_s=1\ ms,$ the periodicity $P$ of the first frame structure is 6 ms; and assuming that the $RTD=5.2\ ms$ and $L_s=0.25\ ms,$ the periodicity $P$ of the first frame structure is 5.25 ms.

It may be understood that the length of the time unit may be related to an SCS.

For example, when the RTD of the first beam can be exactly divided by a length of a slot, a quantity of slots included in the periodicity of the first frame structure is a quotient obtained by exactly dividing the RTD of the first beam by the length of the slot. For another example, when the RTD of the first beam cannot be exactly divided by a length of a slot, a non-integer is obtained by dividing the RTD of the first beam by the length of the slot, and then the non-integer is rounded to obtain a quantity of slots included in the periodicity of the first frame structure.

Based on a relationship between the RTD and the satellite elevation angle, a distribution diagram of beams at a first satellite elevation angle, a second satellite elevation angle, and a third satellite elevation angle shown in FIG. 5 is presented for beams at different satellite elevation angles used by the network device. Beams at a same satellite elevation angle have a same RTD. In other words, periodicities of frame structures used for communication between the network device and terminal devices covered by the beams at the same satellite elevation angle are the same. An RTD of a beam at a larger satellite elevation angle is also larger, and correspondingly, a periodicity of a frame structure is also longer. For example, a periodicity of a frame structure corresponding to the beam at the first satellite elevation angle is longer than a periodicity of a frame structure corresponding to the beam at the second satellite elevation angle, and the periodicity of the frame structure corresponding to the beam at the second satellite elevation angle is longer than a periodicity of a frame structure corresponding to the beam at the third satellite elevation angle. However, it should be understood that, this application is not limited to a case in which the same frame structure is used for communication between the network device and the terminal devices covered by the beams at the same satellite elevation angle.

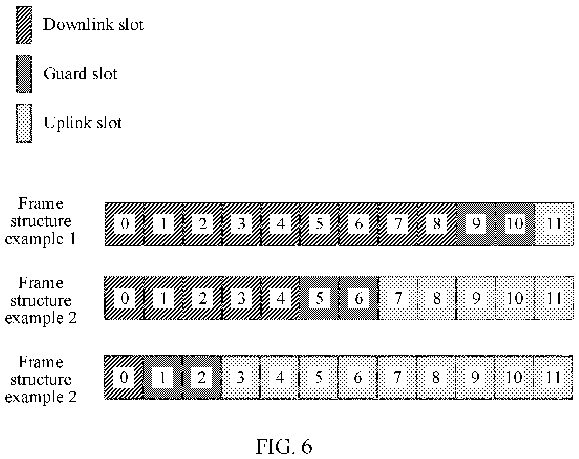

FIG. 6 provides several examples in which periodicities of frame structures are the same and time unit distribution manners in the frame structures are different. In a frame structure example 1, a slot #0 to a slot #8 are all downlink slots D, a slot #9 and a slot #10 are both guard slots S, and a slot #11 is an uplink slot U. In a frame structure example 2, a slot #0 to a slot #4 are all downlink slots D, a slot #5 and a slot #6 are both guard slots S, and a slot #7 to a slot #11 are all uplink slots U. In a frame structure example 3, a slot #0 is a downlink slot D, a slot #1 and a slot #2 are both guard slots S, and a slot #3 to a slot #11 are all uplink slots U.

In some embodiments, the frame structure (including the foregoing first frame structure) may be related to a communication service. For example, in a downlink (downlink, DL)-heavy service, the frame structure example 1 in FIG. 6 is used; in an uplink (uplink, UL)-heavy service, the frame structure example 3 in FIG. 6 is used; and in a service with uplink/downlink load balancing (or a symmetric service), the frame structure example 2 in FIG. 6 is used.

FIG. 6 is merely an example. This application does not exclude possible frame structures other than the frame structures shown in FIG. 6. For example, a slot #0 to a slot #1 are downlink slots, a slot #2 is a guard slot, a slot #3 is an uplink slot, a slot #4 and a slot #5 are downlink slots, a slot #6 is a guard slot, and a slot #7 to a slot #11 are uplink slots.

In this embodiment of this application, a quantity of uplink time units, a quantity of downlink time units, and a quantity of guard time units in the first frame structure are not limited, or a ratio of a quantity of uplink time units, a quantity of downlink time units, and a quantity of guard time units is not limited.

To ensure that no uplink/downlink collision exists between terminal devices communicating with the network device, the network device needs to wait until all the terminal devices receive downlink information, and then receive uplink information of the terminal devices. The quantity of guard time units may be determined based on a differential (differential) RTD of the first beam, to obtain a guard period that meets a time length, and avoid impact of an excessively long guard period on spectrum efficiency.

In some embodiments, the quantity of guard time units is a sum of the differential RTD and the uplink/downlink switching time. The differential RTD may also be expressed as a difference between the maximum RTD ($RTD_{max}$) and the minimum RTD ($RTD_{min}$) of the first beam. The maximum RTD ($RTD_{max}$) and the minimum RTD ($RTD_{min}$) of the first beam are described in the foregoing embodiment, and details are not described herein again.

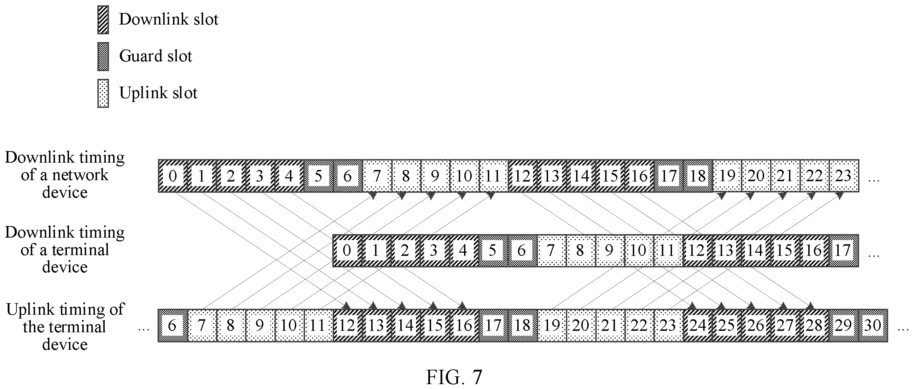

Refer to FIG. 7. An example in which the first frame structure is the foregoing frame structure example 2, the RTD of the first beam is 12 slots, and the guard period is two slots is used. The network device sends the downlink information in the slot #0 to the slot #4 based on the downlink timing of the network device. The terminal device receives, in the slot #0 to the slot #4 based on the downlink timing of the terminal device, the downlink information sent by the network device, and sends the uplink information in the slot #6 to the slot #11 the RTD earlier based on the uplink timing of the terminal device. Further, the network device sends the downlink information in a slot #12 to a slot #16 based on the downlink timing of the network device. With reference to FIG. 7, when the network device communicates with the terminal device by using the first frame structure, there is no uplink/downlink collision.

In S110, that the terminal device determines the first frame structure includes: determining the periodicity of the first frame structure and/or quantities and/or distribution of various types of time units in the first frame structure.

For S110, it should be noted that, that the terminal device determines the first frame structure may include but is not limited to the following several possible examples:

Example 1: The network device sends first configuration information to the terminal device, where the first configuration information includes the periodicity of the first frame structure. For example, the network device sends SIB signaling to the terminal device. In the SIB signaling, an uplink/downlink frame structure periodicity (DL-UL-Transmission Periodicity) parameter in a TDD uplink/downlink pattern (TDD-UL-DL-Pattern) parameter indicates the periodicity of the first frame structure.

It should be understood that, in Example 1, that the SIB signaling carries the first configuration information is merely used as an example. This should not be construed as any limitation on this application. For example, the first configuration information may alternatively be carried in any known or unknown (newly added) signaling.

It should be further understood that the periodicity of the first frame structure included in the first configuration information sent by the network device may be determined based on the foregoing formula (1).

Example 2: The terminal device determines an identifier of the first beam, and determines the periodicity of the first frame structure in a first correspondence based on the identifier of the first beam.

In an embodiment, refer to Table 2 below. The first correspondence includes at least one beam identifier (for example, beam identifiers 0 to N in Table 2) and a periodicity of at least one frame structure (for example, $P_1$ to $P_N$ in Table 2), and the at least one beam identifier is in one-to-one correspondence with the periodicity of the at least one frame structure. The terminal device may determine a periodicity of a frame structure corresponding to the identifier of the first beam in the first correspondence as the periodicity of the first frame structure.

Table 2

| Beam identifier | Periodicity of a frame structure |
|---|---|
| 0 | $P_1$ |
| 1 | $P_2$ |
| ... | ... |
| N | $P_N$ |

In another embodiment, refer to Table 3 below. The first correspondence includes at least one beam identifier (for example, 0 to N in Table 3) and at least one RTD (for example, 4 ms to 8 ms in Table 3), and the at least one beam identifier is in one-to-one correspondence with the at least one RTD. The terminal device may determine an RTD corresponding to the identifier of the first beam in the first correspondence, where the RTD is the RTD of the first beam, and then determine the periodicity of the first frame structure based on the RTD of the first beam. For example, the terminal device determines the periodicity of the first frame structure based on the RTD by using the foregoing formula (1).

Table 3

| Beam identifier | RTD |
|---|---|
| 0 | 4 ms |
| 1 | 4.5 ms |
| ... | ... |
| N | 8 ms |

It should be understood that the first correspondence in Example 2 may be predefined in the terminal device; or the first correspondence may be preconfigured, for example, configured by using signaling sent by the network device to the terminal device in advance; or the first correspondence may be defined in a protocol. This is not limited in this application.

In the foregoing Example 2, the terminal device may determine the identifier of the first beam based on a synchronization signal block (synchronization signal block, SSB). For example, in a scenario in which an SSB beam is the same as a beam used by a channel state information reference signal (channel state information reference signal, CSI-RS), a physical downlink shared channel (physical downlink shared channel, PDSCH), or the like, an SSB index in the SSB may be used to determine the first beam in a plurality of beams of the network device, that is, there is a correspondence between the SSB index and the identifier of the first beam.

Example 3: The terminal device determines the periodicity of the first frame structure based on an ephemeris and/or a global navigation satellite system (global navigation satellite system, GNSS). For example, the terminal device may obtain the RTD of the first beam through calculation based on the ephemeris and/or the GNSS, and then obtain the periodicity of the first frame structure through calculation based on the foregoing formula (1) and the RTD of the first beam.

In Example 1, the periodicity of the first frame structure may be directly indicated, so that the terminal device obtains the periodicity of the first frame structure. In Example 2 and Example 3, the network device does not need to configure the periodicity of the first frame structure, to reduce signaling overheads.

In the foregoing Example 1 to Example 3, quantities and/or distribution of various types of time units (including the uplink time unit, the downlink time unit, and the guard time unit) in the first frame structure may be determined based on the communication service. As described above, the communication service includes but is not limited to the DL-heavy service, the UL-heavy service, the symmetric service, or the like. The quantities and/or distribution of various types of time units in the first frame structure may be predefined. For example, quantities and/or distribution of various types of time units corresponding to different frame structure periodicities are predefined. After determining the periodicity of the first frame structure based on Example 1, Example 2, or Example 3, the terminal device determines the quantities and/or distribution of various types of time units in the first frame structure based on a rule predefined in the terminal device. Alternatively, the quantities and/or distribution of various types of time units in the first frame structure may be preconfigured by the network device by using signaling. For example, the network device preconfigures, for the terminal device, quantities and/or distribution of various types of time units corresponding to different frame structure periodicities. After determining the periodicity of the first frame structure based on Example 1, Example 2, or Example 3, the terminal device determines the quantities and/or distribution of various types of time units in the first frame structure based on a rule predefined in the terminal device. Alternatively, the quantities and/or distribution of various types of time units in the first frame structure may be configured by the network device by using signaling. For example, the network device sends SIB signaling to the terminal device, and a TDD uplink/downlink pattern (TDD-UL-DL-Pattern) parameter in the SIB signaling further includes the quantities and/or distribution of various types of time units in the first frame structure.

Example 4: The network device sends second configuration information to the terminal device, where the second configuration information includes a frame structure identifier; and the terminal device determines the first frame structure in a second correspondence based on the frame structure identifier. It should be noted that the second correspondence includes at least one frame structure identifier and at least one frame structure, the at least one frame structure identifier is in one-to-one correspondence with the at least one frame structure, and the at least one frame structure varies in terms of a periodicity and/or a time unit distribution manner. Refer to Table 4 below. Frame structure identifiers 0 to 2 correspond to frame structures of different communication services (DL-heavy, symmetric, and UL-heavy) in a periodicity $P_0$, and a frame structure identifier 3 corresponds to frame structure in a periodicity $P_1$.

Table 4

| Frame structure identifier | Frame structure |
|---|---|
| 0 | DL-heavy ($P_0$) |
| 1 | Symmetric ($P_0$) |
| 2 | UL-heavy ($P_0$) |
| 3 | DL-heavy ($P_1$) |
| ... | ... |

For example, the network device may communicate with terminal devices based on a plurality of beams, the plurality of beams correspond to periodicities of M frame structures, and a periodicity of an $i^{th}$ frame structure in the periodicities of the M frame structures corresponds to $W_i$ time unit distribution manners. In this case, the second correspondence includes at least $\sum_{1}^{M} W_i$ frame structures and a frame structure identifier corresponding to each of the $\sum_{1}^{M} W_i$ frame structures. For example, if the plurality of beams shown in FIG. 5 correspond to periodicities of three frame structures, and the periodicity of each frame structure corresponds to time unit distribution manners in three communication service scenarios shown in FIG. 6, the second correspondence includes at least nine frame structures and frame structure identifiers corresponding to the nine frame structures.

Example 5: The terminal device determines an identifier of the first beam, and determines a third correspondence based on the identifier of the first beam, where the third correspondence includes at least one frame structure identifier and at least one frame structure, and the at least one frame structure identifier is in one-to-one correspondence with the at least one frame structure; the network device sends third configuration information to the terminal device, where the third configuration information includes a frame structure identifier; and the terminal device may determine the first frame structure in the third correspondence based on the frame structure identifier in the third configuration information.

In the foregoing Example 5, at least one third correspondence is predefined, preconfigured, or defined in a protocol, and each third correspondence corresponds to one beam (or one beam identifier).

For example, a periodicity of a same frame structure includes three time unit distribution manners shown in FIG. 6. The third correspondence corresponding to the first beam is shown in Table 5 below.

Table 5

| Frame structure identifier | Frame structure |
|---|---|
| 0 | DL-heavy |
| 1 | Symmetric |
| 2 | UL-heavy |

In the foregoing Example 5, an implementation in which the terminal device determines the identifier of the first beam is similar to that in the foregoing Example 2, and details are not described herein again.

Optionally, the second configuration information and the third configuration information each may be a frame format indicator (frame Format Indicator) parameter in a TDD uplink/downlink pattern (TDD-UL-DL-Pattern) parameter in SIB signaling. Certainly, this is not limited in this application. For example, the second configuration information and/or the third configuration information may alternatively be carried in any known or unknown (newly added) signaling.

In the foregoing Example 4 and Example 5, compared with a manner in which information such as the periodicity of the first frame structure, the quantity of uplink time units, and the quantity of downlink time units is indicated by using the SIB signaling, a manner in which the identifier of the frame structure is indicated reduces signaling overheads. Further, in Example 5, compared with Example 4, a value of the frame structure identifier is smaller, so that signaling overheads of the third configuration information indicating the frame structure identifier are lower than signaling overheads of the second configuration information.

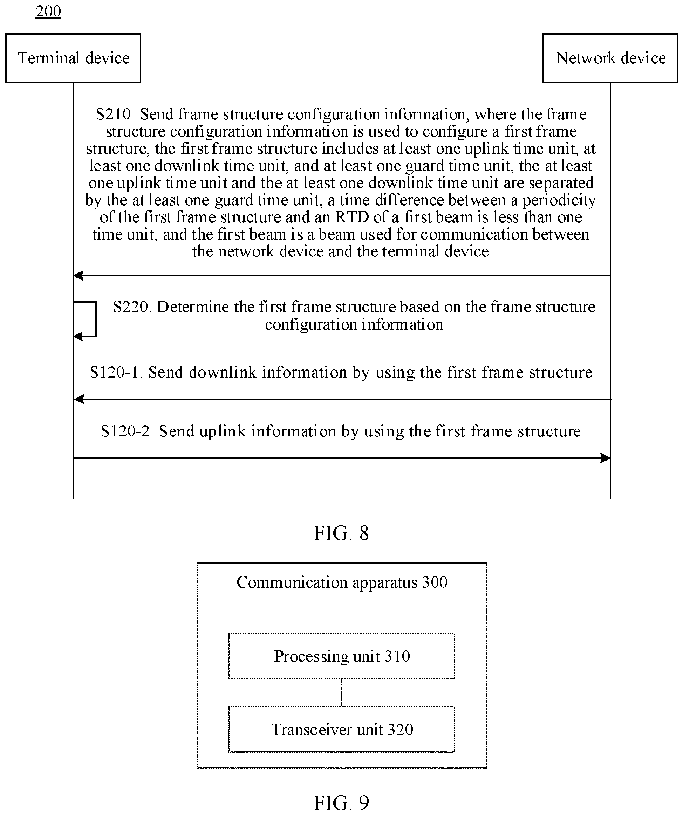

FIG. 8 is a schematic flowchart of a communication method 200 according to an embodiment of this application. As shown in FIG. 8, before S110 shown in the foregoing method 100, the method 200 may further include the following step: S210. The network device sends frame structure configuration information to the terminal device.

It should be noted that the frame structure configuration information may be used to configure the first frame structure. In the foregoing Example 1, the frame structure configuration information may include the first configuration information. In the foregoing Example 4, the frame structure configuration information may include the second configuration information. In the foregoing Example 5, the frame structure configuration information may include the third configuration information.

In the foregoing Example 1 to Example 3, the frame structure configuration information may further include information indicating a time unit distribution manner in the first frame structure, for example, indicating at least one of the quantity of uplink time units, the quantity of downlink time units, a ratio of the quantity of uplink time units to the quantity of downlink time units, the quantity of guard time units, the maximum RTD of the first beam, and the minimum RTD of the first beam. The maximum RTD and the minimum RTD of the first beam may be used to determine the quantity of guard time units in the first frame structure.

In some embodiments, before sending the frame structure configuration information to the terminal device, the network device further needs to determine a periodicity of and/or a time unit distribution manner in the first frame structure. For example, the network device may determine the identifier of the first beam used by the network device to send the downlink information, and determine the periodicity of the first frame structure in the first correspondence based on the identifier of the first beam. For another example, the network device may determine the periodicity of the first frame structure based on the ephemeris and/or the GNSS. For another example, the network device may determine the time unit distribution manner in the first frame structure based on the communication service.

The first correspondence may be predefined in the network device or defined in a protocol. This is not limited in this application.

Therefore, in this embodiment of this application, based on the RTD of the first beam used for communication between the network device and the terminal device, the periodicity of the first frame structure used for communication between the network device and the terminal device is restricted, so that the time difference between the periodicity of the first frame structure and the RTD of the first beam is less than one time unit, and an uplink/downlink collision is avoided when the network device communicates with the terminal device by using the first frame structure.

Further, the time difference between the periodicity of the first frame structure and the RTD of the first beam is less than one time unit, so that the uplink/downlink collision between the network device and the terminal device is avoided. In this case, the guard period between the uplink time unit and the downlink time unit does not need to be used to avoid the uplink/downlink collision between the network device and the terminal device, so that the quantity of guard time units is reduced and spectrum efficiency is improved.

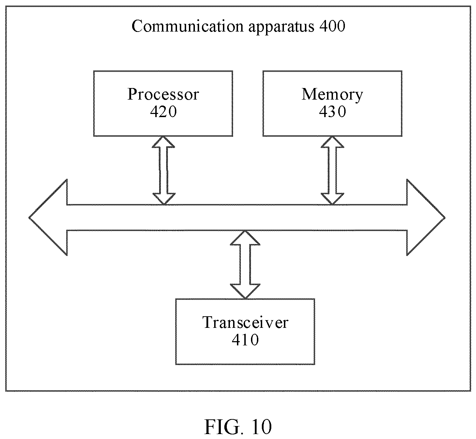

The methods provided in embodiments of this application are described above in detail with reference to FIG. 3 to FIG. 8. Apparatuses provided in embodiments of this application are described below in detail with reference to FIG. 9 and FIG. 10.

FIG. 9 is a block diagram of a communication apparatus according to an embodiment of this application. As shown in FIG. 9, the apparatus 300 may include a processing unit 310 and a transceiver unit 320.

Optionally, the communication apparatus 300 may correspond to the terminal device in the foregoing method embodiments, for example, may be the terminal device, or a component (for example, a chip or a chip system) disposed in the terminal device.

It should be understood that the communication apparatus 300 may correspond to the terminal device in the method shown in FIG. 3 or FIG. 8 according to embodiments of this application. The communication apparatus 300 may include units configured to perform the methods performed by the terminal device in the method 100 in FIG. 3 and the method 200 in FIG. 8. In addition, the units in the communication apparatus 300 and the foregoing other operations and/or functions are separately used to implement corresponding procedures in the method in FIG. 3 or in FIG. 8.

The processing unit 310 may be configured to determine a first frame structure, where the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and a round trip delay RTD of a first beam is less than one time unit, and the first beam is a beam used for communication between a network device and the communication apparatus. The transceiver unit 320 may be configured to communicate with the network device by using the first frame structure.

It should be understood that a specific process in which the units perform the foregoing corresponding steps is described in detail in the foregoing method embodiments. For brevity, details are not described herein.

Optionally, the communication apparatus 300 may correspond to the network device in the foregoing method embodiments, for example, may be a network device, or a component (for example, a chip or a chip system) disposed in the network device.

It should be understood that the communication apparatus 300 may correspond to the network device in the method shown in FIG. 3 or FIG. 8 according to embodiments of this application. The communication apparatus 300 may include units configured to perform the methods performed by the network device in the method 100 in FIG. 3 and the method 200 in FIG. 8. In addition, the units in the communication apparatus 300 and the foregoing other operations and/or functions are separately used to implement corresponding procedures in the method in FIG. 3 or in FIG. 8.

The processing unit 310 may be configured to determine a first frame structure, where the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between the communication apparatus and a terminal device. The transceiver unit 320 may be configured to send frame structure configuration information to the terminal device, where the frame structure configuration information is used to configure the first frame structure. The transceiver unit 320 is further configured to communicate with the terminal device by using the first frame structure.

It should be understood that a specific process in which the units perform the foregoing corresponding steps is described in detail in the foregoing method embodiments. For brevity, details are not described herein.

When the communication apparatus 300 is the terminal device, the transceiver unit 310 in the communication apparatus 300 may be implemented by using a transceiver, for example, may correspond to a transceiver 410 in a communication apparatus 400 shown in FIG. 10. The processing unit 320 in the communication apparatus 300 may be implemented by using at least one processor, for example, may correspond to a processor 420 in the communication apparatus 400 shown in FIG. 10.

When the communication apparatus 300 is the network device, the transceiver unit 310 in the communication apparatus 300 may be implemented by using a transceiver, for example, may correspond to a transceiver 410 in a communication apparatus 400 shown in FIG. 10. The processing unit 320 in the communication apparatus 300 may be implemented by using at least one processor, for example, may correspond to a processor 420 in the communication apparatus 400 shown in FIG. 10.

When the communication apparatus 300 is a chip or a chip system disposed in a communication device (for example, a terminal device or a network device), the transceiver unit 310 in the communication apparatus 300 may be implemented by using an input/output interface, a circuit, or the like. The processing unit 320 in the communication apparatus 300 may be implemented by using a processor, a microprocessor, an integrated circuit, or the like integrated into the chip or the chip system.

FIG. 10 is another block diagram of a communication apparatus according to an embodiment of this application. As shown in FIG. 10, the communication apparatus 400 may include a transceiver 410, a processor 420, and a memory 430. The transceiver 410, the processor 420, and the memory 430 communicate with each other through an internal connection path. The memory 430 is configured to store instructions. The processor 420 is configured to execute the instructions stored in the memory 430, to control the transceiver 410 to send a signal and/or receive a signal.

It should be understood that the communication apparatus 400 may correspond to the terminal device or the network device in the foregoing method embodiments, and may be configured to perform the steps and/or the procedures performed by the terminal device or the network device in the foregoing method embodiments. Optionally, the memory 430 may include a read-only memory and a random access memory, and provide instructions and data for the processor. A part of the memory may further include a non-volatile random access memory. The memory 430 may be an independent device, or may be integrated into the processor 420. The processor 420 may be configured to execute the instructions stored in the memory 430. When the processor 420 executes the instructions stored in the memory, the processor 420 is configured to perform the steps and/or the procedures corresponding to the terminal device or the network device in the foregoing method embodiments.

Optionally, the communication apparatus 400 is the terminal device in the foregoing embodiments.

Optionally, the communication apparatus 400 is the network device in the foregoing embodiments.

The transceiver 410 may include a transmitter and a receiver. The transceiver 410 may further include an antenna, and there may be one or more antennas. The processor 420, the memory 430, and the transceiver 410 may be devices integrated into different chips. For example, the processor 420 and the memory 430 may be integrated into a baseband chip, and the transceiver 410 may be integrated into a radio frequency chip. Alternatively, the processor 420, the memory 430, and the transceiver 410 may be devices integrated into a same chip. This is not limited in this application.

Optionally, the communication apparatus 400 is a component disposed in the terminal device, for example, a chip or a chip system.

Optionally, the communication apparatus 400 is a component disposed in the network device, for example, a chip or a chip system.

Alternatively, the transceiver 420 may be a communication interface, for example, an input/output interface or a circuit. The transceiver 420, the processor 410, and the memory 430 may be integrated into a same chip, for example, integrated into a baseband chip.

This application further provides a processing apparatus, including at least one processor. The at least one processor is configured to execute a computer program stored in a memory, to enable the processing apparatus to perform the method performed by the terminal device or the network device in the foregoing method embodiments.

An embodiment of this application further provides a processing apparatus, including a processor and an input/output interface. The input/output interface is coupled to the processor. The input/output interface is configured to input and/or output information. The information includes at least one of instructions or data. The processor is configured to execute a computer program, to enable the processing apparatus to perform the method performed by the terminal device or the network device in the foregoing method embodiments.

An embodiment of this application further provides a processing apparatus, including a processor and a memory. The memory is configured to store a computer program, and the processor is configured to invoke the computer program from the memory and run the computer program, to enable the processing apparatus to perform the method performed by the terminal device or the network device in the foregoing method embodiments.

An embodiment of this application further provides a communication system, including a terminal device and a network device. The terminal device is configured to perform the method on a terminal device side in any one of the foregoing method embodiments, and the network device is configured to perform the method on a network device side in any one of the foregoing method embodiments.

It should be understood that the foregoing processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, the steps in the foregoing methods may be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a storage medium that is mature in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logical circuit in the processor, or by using instructions in a form of software. The foregoing processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a storage medium that is mature in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and the methods described in this specification includes but is not limited to these memories and any memory of another appropriate type.

According to the methods provided in embodiments of this application, this application further provides a computer program product. The computer program product includes computer program code. When the computer program code is run on a computer, the computer is enabled to perform the method performed by the terminal device or the network device in the foregoing method embodiments.

According to the methods provided in embodiments of this application, this application further provides a computer-readable storage medium. The computer-readable storage medium stores program code. When the program code is run on a computer, the computer is enabled to perform the method performed by the terminal device or the network device in the foregoing method embodiments.

According to the methods provided in embodiments of this application, this application further provides a communication system. The communication system includes the foregoing terminal device and network device.

Terms such as "component", "module", and "system" used in this specification indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both an application that is run on a computing device and the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data groups (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in electronic, mechanical, or other forms.

The units described as separate parts may or may not be physically separate, and parts displayed as units may or may not be physical units, in other words, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or some of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A communication method, comprising:

determining, by a first communication apparatus, a first frame structure, wherein the first frame structure comprises at least one uplink time unit, at least one downlink time unit, and at least one guard time unit, the at least one uplink time unit and the at least one downlink time unit are separated by the at least one guard time unit, a time difference between a periodicity of the first frame structure and a round trip delay RTD of a first beam is less than one time unit, and the first beam is a beam used for communication between a network device and the first communication apparatus; and

communicating, by the first communication apparatus, with the network device by using the first frame structure.

2. The method according to claim 1, wherein the method further comprises:
receiving, by the first communication apparatus, first configuration information sent by the network device, wherein the first configuration information comprises the periodicity of the first frame structure.

3. The method according to claim 1, wherein the method further comprises:

determining, by the first communication apparatus, an identifier of the first beam; and
determining, by the first communication apparatus, the periodicity of the first frame structure in a first correspondence based on the identifier of the first beam, wherein
the first correspondence comprises at least one beam identifier and a periodicity of at least one frame structure, and the at least one beam identifier is in one-to-one correspondence with the periodicity of the at least one frame structure.

4. The method according to claim 1, wherein the method further comprises:
determining, by the first communication apparatus, the periodicity of the first frame structure based on an ephemeris and/or a global navigation satellite system GNSS.

5. The method according to claim 1, wherein the method further comprises:

receiving, by the first communication apparatus, second configuration information sent by the network device, wherein the second configuration information comprises a frame structure identifier; and
determining, by the first communication apparatus, the first frame structure in a second correspondence based on the frame structure identifier, wherein
the second correspondence comprises at least one frame structure identifier and at least one frame structure, and the at least one frame structure identifier is in one-to-one correspondence with the at least one frame structure.

6. The method according to claim 1, wherein the method further comprises:

determining, by the first communication apparatus, an identifier of the first beam;
determining, by the first communication apparatus, a third correspondence based on the identifier of the first beam, wherein the third correspondence comprises at least one frame structure identifier and at least one frame structure, and the at least one frame structure identifier is in one-to-one correspondence with the at least one frame structure;
receiving, by the first communication apparatus, third configuration information sent by the network device, wherein the third configuration information comprises a frame structure identifier; and
determining, by the first communication apparatus, the first frame structure in the third correspondence based on the frame structure identifier.

7. The method according to any one of claims 1 to 6, wherein the RTD is an RTD of a first ground point covered by the first beam, and the first ground point is a ground point that is in ground points covered by the first beam and that is closest to the network device.

8. The method according to any one of claims 1 to 7, wherein the RTD is related to an elevation angle of the first beam, the elevation angle of the first beam is an included angle between a ground plane on which the first ground point covered by the first beam is located and a first connection line, and the first connection line is a virtual connection line between the first ground point and the network device.

9. The method according to any one of claims 1 to 8, wherein the periodicity of the first frame structure is determined based on the RTD and a length of a time unit.

10. The method according to claim 9, wherein the periodicity P of the first frame structure satisfies the following formula (1):

$$P=int(RTD/Ls)*L_s \qquad (1),$$

wherein
int is a rounding function, and $L_s$ is the length of the time unit.

11. The method according to any one of claims 1 to 10, wherein a quantity of guard time units is determined based on a differential RTD of the first beam.

12. The method according to claim 11, wherein the quantity of guard time units is a sum of the differential RTD and uplink/downlink switching time.

13. The method according to any one of claims 1 to 12, wherein the determining, by a first communication apparatus, a first frame structure further comprises:
determining, by the first communication apparatus, a quantity of uplink time units and a quantity of downlink time units.

14. A communication method, comprising:

sending, by a second communication apparatus, frame structure configuration information, wherein the frame structure configuration information is used to configure a first frame structure, the first frame structure comprises at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between the second communication apparatus and a terminal device; and
communicating, by the second communication apparatus, with the terminal device by using the first frame structure.

15. The method according to claim 14, wherein the frame structure configuration information comprises the periodicity of the first frame structure.

16. The method according to claim 14 or 15, further comprising:

determining, by the second communication apparatus, an identifier of the first beam; and
determining, by the second communication apparatus, the periodicity of the first frame structure in a first correspondence based on the identifier of the first beam, wherein
the first correspondence comprises at least one beam identifier and a periodicity of at least one frame structure, and the at least one beam identifier is in one-to-one correspondence with the periodicity of the at least one frame structure.

17. The method according to claim 14 or 15, further comprising:
determining, by the second communication apparatus, the periodicity of the first frame structure based on an ephemeris and/or a global navigation satellite system GNSS.

18. The method according to claim 14, wherein the frame structure configuration information comprises a frame structure identifier, the frame structure identifier is used to determine the first frame structure in a second correspondence, the second correspondence comprises at least one frame structure identifier and at least one frame structure, and the at least one frame structure identifier is in one-to-one correspondence with the at least one frame structure.

19. The method according to claim 14, wherein the frame structure configuration information comprises a frame structure identifier, the frame structure identifier is used to determine the first frame structure in a third correspondence corresponding to the first beam, the third correspondence comprises at least one frame structure identifier and at least one frame structure of the first beam, and the at least one frame structure identifier is in one-to-one correspondence with the at least one frame structure.

20. The method according to any one of claims 14 to 19, wherein the RTD is related to an elevation angle of the first beam, the elevation angle of the first beam is an included angle between a ground plane on which a first ground point covered by the first beam is located and a first connection line, and the first connection line is a virtual connection line between the first ground point and the second communication apparatus.

21. The method according to any one of claims 14 to 20, wherein the periodicity of the first frame structure is determined based on the RTD and a length of a time unit.

22. The method according to claim 21, wherein the periodicity P of the first frame structure satisfies the following formula (1):

$$P=int(RTD/Ls)*L_s \qquad (1),$$

wherein
*int* is a rounding function, and $L_s$ is the length of the time unit.

23. The method according to any one of claims 14 to 22, wherein a quantity of guard time units is determined based on a differential RTD of the first beam.

24. The method according to claim 23, wherein the quantity of guard time units is a sum of the differential RTD and uplink/downlink switching time.

25. The method according to any one of claims 14 to 24, further comprising:
determining, by the second communication apparatus, a quantity of uplink time units and a quantity of downlink time units.

26. A communication apparatus, comprising:

a processing unit, configured to determine a first frame structure, wherein the first frame structure comprises at least one uplink time unit, at least one downlink time unit, and at least one guard time unit, the at least one uplink time unit and the at least one downlink time unit are separated by the at least one guard time unit, a time difference between a periodicity of the first frame structure and a round trip delay RTD of a first beam is less than one time unit, and the first beam is a beam used for communication between a network device and the communication apparatus; and
a transceiver unit, configured to communicate with the network device by using the first frame structure.

27. The apparatus according to claim 26, wherein the transceiver unit is further configured to:
receive first configuration information sent by the network device, wherein the first configuration information comprises the periodicity of the first frame structure.

28. The apparatus according to claim 26, wherein the processing unit is further configured to:

determine an identifier of the first beam; and
determine the periodicity of the first frame structure in a first correspondence based on the identifier of the first beam, wherein
the first correspondence comprises at least one beam identifier and a periodicity of at least one frame structure, and the at least one beam identifier is in one-to-one correspondence with the periodicity of the at least one frame structure.

29. The apparatus according to claim 26, wherein the processing unit is further configured to:
determine the periodicity of the first frame structure based on an ephemeris and/or a global navigation satellite system GNSS.

30. The apparatus according to claim 26, wherein

the transceiver unit is further configured to receive second configuration information sent by the network device, wherein the second configuration information comprises a frame structure identifier; and

the processing unit is further configured to determine the first frame structure in a second correspondence based on the frame structure identifier, wherein
the second correspondence comprises at least one frame structure identifier and at least one frame structure, and the at least one frame structure identifier is in one-to-one correspondence with the at least one frame structure.

31. The apparatus according to claim 26, wherein

the processing unit is further configured to determine an identifier of the first beam;
the processing unit is further configured to determine a third correspondence based on the identifier of the first beam, wherein the third correspondence comprises at least one frame structure identifier and at least one frame structure, and the at least one frame structure identifier is in one-to-one correspondence with the at least one frame structure;
the transceiver unit is further configured to receive third configuration information sent by the network device, wherein the third configuration information comprises a frame structure identifier; and
the processing unit is further configured to determine the first frame structure in the third correspondence based on the frame structure identifier.

32. A communication apparatus, comprising:

a processing unit, configured to determine a first frame structure, wherein the first frame structure comprises at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between the communication apparatus and a terminal device; and
a transceiver unit, configured to send frame structure configuration information to the terminal device, wherein the frame structure configuration information is used to configure the first frame structure, wherein
the transceiver unit is further configured to communicate with the terminal device by using the first frame structure.

33. The apparatus according to claim 32, wherein the frame structure configuration information comprises the periodicity of the first frame structure.

34. The apparatus according to claim 32, wherein the frame structure configuration information comprises a frame structure identifier, the frame structure identifier is used to determine the first frame structure in a second correspondence, the second correspondence comprises at least one frame structure identifier and at least one frame structure, and the at least one frame structure identifier is in one-to-one correspondence with the at least one frame structure.

35. The apparatus according to claim 32, wherein the frame structure configuration information comprises a frame structure identifier, the frame structure identifier is used to determine the first frame structure in a third correspondence corresponding to the first beam, the third correspondence comprises at least one frame structure identifier and at least one frame structure of the first beam, and the at least one frame structure identifier is in one-to-one correspondence with the at least one frame structure.

36. A communication apparatus, comprising a processor and a memory, wherein the memory is configured to store a computer program, and the processor is configured to invoke and run the computer program stored in the memory, to perform the method according to any one of claims 1 to 25.

37. A communication system, comprising a terminal device and a network device, wherein the terminal device is configured to perform the method according to any one of claims 1 to 13, and the network device is configured to perform the method according to any one of claims 13 to 25.

38. A chip, comprising a processor, configured to invoke computer instructions from a memory and run the computer instructions, to enable a device in which the chip is installed to perform the method according to any one of claims 1 to 25.

39. A computer-readable storage medium, configured to store computer program instructions, wherein the computer program enables a computer to perform the method according to any one of claims 1 to 25.

**40.** A computer program product, comprising computer program instructions, wherein the computer program instructions enable a computer to perform the method according to any one of claims 1 to 25.

FIG. 1

Downlink slot

Guard slot

Uplink slot

0   10   20   30   40   50   60   70   80

(Slot)

FIG. 2a

▨ Downlink slot
▓ Guard slot
▦ Uplink slot

Downlink timing of a network device

Slot #0

Slot #60 to slot #67

Downlink timing of a terminal device

Slot #0

← 10.5 → slots

Slot #0

Uplink timing of the terminal device

Slot #0

Slot #80 to slot #87

FIG. 2b

100

Terminal device

Network device

S110. Determine a first frame structure, where the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between the network device and the terminal device

S120-1. Send downlink information by using the first frame structure

S120-2. Send uplink information by using the first frame structure

FIG. 3

First
beam

First
ground
point

FIG. 4

First satellite elevation angle

Second satellite elevation angle

Third satellite elevation angle

FIG. 5

Downlink slot

Guard slot

Uplink slot

Frame structure example 1

| 0 | 1 | 2 | 3 | 4 | 5 | 6 | 7 | 8 | 9 | 10 | 11 |

Frame structure example 2

| 0 | 1 | 2 | 3 | 4 | 5 | 6 | 7 | 8 | 9 | 10 | 11 |

Frame structure example 2

| 0 | 1 | 2 | 3 | 4 | 5 | 6 | 7 | 8 | 9 | 10 | 11 |

FIG. 6

FIG. 7

EP 4 554 112 A1

200

| Terminal device | | Network device |
|---|---|---|

S210. Send frame structure configuration information, where the frame structure configuration information is used to configure a first frame structure, the first frame structure includes at least one uplink time unit, at least one downlink time unit, and at least one guard time unit, the at least one uplink time unit and the at least one downlink time unit are separated by the at least one guard time unit, a time difference between a periodicity of the first frame structure and an RTD of a first beam is less than one time unit, and the first beam is a beam used for communication between the network device and the terminal device

S220. Determine the first frame structure based on the frame structure configuration information

S120-1. Send downlink information by using the first frame structure

S120-2. Send uplink information by using the first frame structure

FIG. 8

Communication apparatus 300

Processing unit 310

Transceiver unit 320

FIG. 9

Communication apparatus 400

Processor
420

Memory
430

Transceiver
410

FIG. 10

## INTERNATIONAL SEARCH REPORT

| International application No. |
|---|
| **PCT/CN2023/102230** |

**A. CLASSIFICATION OF SUBJECT MATTER**

H04B7/185(2006.01)i

According to International Patent Classification (IPC) or to both national classification and IPC

**B. FIELDS SEARCHED**

Minimum documentation searched (classification system followed by classification symbols)

IPC:H04B, H04W, H04L

Documentation searched other than minimum documentation to the extent that such documents are included in the fields searched

Electronic data base consulted during the international search (name of data base and, where practicable, search terms used)

CNTXT, ENTXTC, DWPI, CNKI, 3GPP: 帧, 上行, 下行, 卫星, 保护间隔, 保护时间, 时分复用, 往返时延, frame?, uplink, downlink, satellite, guard time, guard period, TDD, round trip delay, RTD, RTT

**C. DOCUMENTS CONSIDERED TO BE RELEVANT**

| Category* | Citation of document, with indication, where appropriate, of the relevant passages | Relevant to claim No. |
|---|---|---|
| A | CN 101895331 A (PEKING UNIVERSITY) 24 November 2010 (2010-11-24) <br> entire document | 1-40 |
| A | US 2017005741 A1 (QUALCOMM INC.) 05 January 2017 (2017-01-05) <br> entire document | 1-40 |
| A | CN 110943772 A (10TH RESEARCH INSTITUTE OF CHINA ELECTRONICS TECHNOLOGY GROUP CORP.) 31 March 2020 (2020-03-31) <br> entire document | 1-40 |
| A | CN 101803262 A (TELEFONAKTIEBOLAGET LM ERICSSON AB) 11 August 2010 (2010-08-11) <br> entire document | 1-40 |
| A | CN 109286938 A (ZTE CORP.) 29 January 2019 (2019-01-29) <br> entire document | 1-40 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **22 September 2023** | **24 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/102230** |

| Patent document cited in search report | | | Publication date (day/month/year) | Patent family member(s) | | | Publication date (day/month/year) |
|---|---|---|---|---|---|---|---|
| CN | 101895331 | A | 24 November 2010 | None | | | |
| US | 2017005741 | A1 | 05 January 2017 | WO | 2017004024 | A2 | 05 January 2017 |
| | | | | WO | 2017004024 | A3 | 09 February 2017 |
| | | | | EP | 3562062 | A1 | 30 October 2019 |
| | | | | EP | 3562062 | B1 | 28 December 2022 |
| | | | | HK | 1249970 | A1 | 16 November 2018 |
| | | | | EP | 3317980 | A2 | 09 May 2018 |
| | | | | EP | 3317980 | B1 | 24 July 2019 |
| | | | | ES | 2751577 | T3 | 01 April 2020 |
| | | | | EP | 3562061 | A1 | 30 October 2019 |
| | | | | US | 10693574 | B2 | 23 June 2020 |
| | | | | HUE | 045747 | T2 | 28 January 2020 |
| | | | | JP | 2018521582 | A | 02 August 2018 |
| | | | | JP | 6767401 | B2 | 14 October 2020 |
| | | | | US | 2020252145 | A1 | 06 August 2020 |
| CN | 110943772 | A | 31 March 2020 | None | | | |
| CN | 101803262 | A | 11 August 2010 | EP | 3512139 | A1 | 17 July 2019 |
| | | | | US | 2015003303 | A1 | 01 January 2015 |
| | | | | US | 9699322 | B2 | 04 July 2017 |
| | | | | USRE | 45653 | E | 11 August 2015 |
| | | | | US | 2022337705 | A1 | 20 October 2022 |
| | | | | US | 2011274015 | A1 | 10 November 2011 |
| | | | | US | 8767697 | B2 | 01 July 2014 |
| | | | | PL | 2506479 | T3 | 31 October 2019 |
| | | | | PL | 2198550 | T3 | 31 December 2012 |
| | | | | DK | 2506479 | T3 | 11 June 2019 |
| | | | | TR | 201907328 | T4 | 21 June 2019 |
| | | | | PT | 2506479 | T | 06 June 2019 |
| | | | | CA | 2698756 | A1 | 19 March 2009 |
| | | | | CA | 2698756 | C | 26 April 2016 |
| | | | | US | 2017279969 | A1 | 28 September 2017 |
| | | | | US | 11405508 | B2 | 02 August 2022 |
| | | | | HUE | 044364 | T2 | 28 October 2019 |
| | | | | JP | 2010539785 | A | 16 December 2010 |
| | | | | JP | 5016114 | B2 | 05 September 2012 |
| | | | | US | 2009073902 | A1 | 19 March 2009 |
| | | | | US | 7986681 | B2 | 26 July 2011 |
| | | | | ES | 2390798 | T3 | 16 November 2012 |
| | | | | ES | 2741177 | T3 | 10 February 2020 |
| | | | | EP | 2198550 | A1 | 23 June 2010 |
| | | | | EP | 2198550 | A4 | 09 February 2011 |
| | | | | EP | 2198550 | B1 | 25 July 2012 |
| | | | | BRPI | 0816249 | A2 | 24 March 2015 |
| | | | | EP | 2506479 | A2 | 03 October 2012 |
| | | | | EP | 2506479 | A3 | 30 July 2014 |
| | | | | EP | 2506479 | B1 | 08 May 2019 |
| | | | | WO | 2009035399 | A1 | 19 March 2009 |
| CN | 109286938 | A | 29 January 2019 | None | | | |

Form PCT/ISA/210 (patent family annex) (July 2022)

**REFERENCES CITED IN THE DESCRIPTION**

**Patent documents cited in the description**

- CN 202210857620